# EUROPEAN PATENT SPECIFICATION

(11) **EP 1 140 490 B1**
(45) Date of publication and mention of the grant of the patent: **22.12.2010**
(21) Application number: 99970633.6
(22) Date of filing: 14.10.1999
(51) Int. Cl.: B32B 25/10, A41D 31/02

(54) **BREATHABLE ELASTIC LAMINATES**
ATMUNGSFÄHIGE, ELASTISCHE VERBUNDWERKSTOFFE
STRATIFIES ELASTIQUES IMPERRESPIRANTS

(30) Priority: 20.10.1998 US 104947 P
(43) Date of publication of application: 10.10.2001
(73) Proprietor: Tredegar Film Products Corporation, Richmond, VA 23225 (US)
(72) Inventor: BRUCE, Stephen, D., Crystal Lake, IL 60012 (US); MIDDLESWORTH, Jeffrey, A., Wauconda, IL 60084 (US); CREE, James, Chesterfield, VA 23838 (US)
(74) Representative: van Westenbrugge, Andries
(86) International application number: PCT/US1999/024103
(87) International publication number: WO 2000/023273

(56) References cited:
- WO-A-96/10979
- WO-A-96/40513
- WO-A-98/08678
- WO-A-99/14047
- US-A- 4 446 189
- US-A- 4 704 112
- US-A- 5 769 993
- PATENT ABSTRACTS OF JAPAN vol. 1995, no. 02, 31 March 1995 (1995-03-31) & JP 06 328601 A (NIPPON KIYUUSHIYUUTAI GIJUTSU KENKYUSHO:KK), 29 November 1994 (1994-11-29)
- PATENT ABSTRACTS OF JAPAN vol. 1995, no. 02, 31 March 1995 (1995-03-31) & JP 06 328600 A (NIPPON KIYUUSHIYUUTAI GIJUTSU KENKYUSHO:KK), 29 November 1994 (1994-11-29)
- PATENT ABSTRACTS OF JAPAN vol. 018, no. 679 (M-1728), 21 December 1994 (1994-12-21) & JP 06 270340 A (KURARAY CO LTD), 27 September 1994 (1994-09-27)

## Description

### BACKGROUND OF THE INVENTION

### Technical Field

This invention relates generally to a method of preparing polymeric non-woven elastic film laminates. More specifically, this invention is directed toward perforated elastic films laminated to a non-woven fabric that is treated such that the resulting laminate is elastic in the cross or transverse direction and may be elastic in the machine direction.

### Background

In the disposable garment market there is a longstanding and continuous need for more flexible garments and garments that breathe. Flexibility is needed so that the wearer can be active without feeling constricted by the garment, elasticity is needed, because, once flexibility is achieved, elasticity provides the wearer with a garment that retains or returns to its original shape after being flexed. At the same time, in all synthetic or polymeric garments, comfort similar to natural fabrics is the goal. Often synthetic fabrics used in durable or disposable garments give the wearer an uncomfortable feeling, as the moisture from perspiration and normal body respiration are not passed out of the garment and into the ambient air. Making a breathable synthetic fabric or film has occupied a large number of technical efforts.

It is against this backdrop that many consumer disposable garment manufacturers find themselves placed. Consumer disposables include diapers, adult incontinence products, surgical gowns, surgical drapes, and the like. The manufacturers of these products desire a garment that not only provides the wearer with freedom of movement, but a comfortable garment as well.

U.S. Patent No. RE35,206 suggests post-drawing a nonwoven web under certain conditions; the fibers making up this web are restructured to provide the web with reduced pore size and a narrower pore size distribution. Such post-treated webs are purported to have unique pore size, directional absorption, and elastic recovery properties.

U.S. Patent No. 5,592,690 suggests that garments and other articles should include an elastic laminated sheet having the properties of stretchability and recoverability. The laminate includes an elastic laminated sheet made from a nonwoven fibrous web and an elastomeric film. The elastomeric films may be liquid impermeable or, alternatively, various degrees of air or vapor permeability may be achieved in the elastic sheet using mechanical microvoids or perforations. This document does not disclose or suggest a method of lamination or any means of perforating.

U.S. Patent No. 5,422,172 suggests that an elastic laminated sheet can be made from a nonwoven fibrous web and an elastomeric film. The laminated elastomeric film is recoverably stretchable to provide elasticity to the laminated sheet. Lamination by extrusion or adhesion of the nonwoven fibrous web to the elastomeric film are suggested. In-line lamination and incremental stretching are also suggested. Various degrees of vapor or air permeability are suggested, using mechanical microvoids. Among the suggested applications are diapers, pants, surgical gowns, sheets, dressings, and hygiene products.

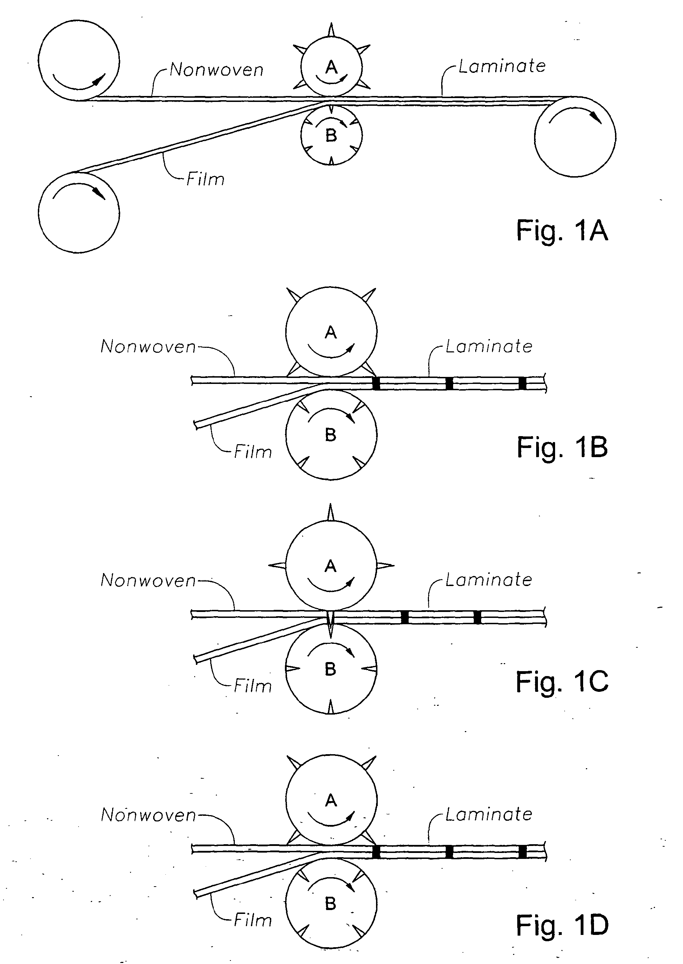

WO 96/10979 discloses a coversheet for an aborbent product and a lamination process for making said coversheet, wherein three layers are laminated contemporaneously (Figure 1).

Non-woven polymeric materials are known, as are treated or consolidated non-wovens, where such treatment or consolidation acts to render the non-woven elastic in the cross or transverse direction. Also known are elastic films that have a high degree of elasticity. Preparation of films having good breathability, as measured by water vapor transmission rate (WVTR) using highly filled polymers, usually polefins, are also known. However, there is still a commercial need for fabric that can be made into an elastic, flexible, and breathable garment.

### SUMMARY OF THE INVENTION

The present invention relates to the method defined in claim 1.

A aminated made from at least one mono- or biaxially-elastic or stretchable non-woven web and an elastic film where the laminate is brethable delivers a result that can be made into a garment that has both stretchability as well as breathability.

We have discovered that a non-woven/elastic film laminate having good breathability, in terms of WVTR, can be formed in a process comprising laminating a uniaxial or biaxially stretchable non-woven web and an elastic film by a lamination means that also perforates the laminate contemporaneously, rendering the laminate both stretchable and breathable. The laminate will be stretchable in the transverse or cross direction (CD) over a range of 5% to 30%, in the machine direction (MD) from 1% to 40%, and will have a breathability, or WVTR, exceeding 5000 g/m2/per 24 hours at 37.8 °C. Additionally, the laminate may include a moisture wicking function that is achieved by creating a fluid gradient established by making the naturally hydrophobic non-woven hydrophilic on one side, generally the side laminated to the naturally hydrophilic elastomeric film.

The lamination may be a stand-alone process performed on a previously perforated elastomeric film. Such perforation can be accomplished by needles, ultrasound, heat, and the like. Alternatively, in a preferred embodiment, the stretchable non-woven web is laminated to the elastic film and perforation occurs at substantially the same time. The lamination can be fusion lamination, adhesive lamination, hot needle lamination, heat lamination, or combinations thereof. Perforation may be accomplished in either of the processes by using needles, hot needles, hydrosound, ultrasound, or by using combinations thereof.

Among the embodiments contemplated is a method of preparing an elastic laminate including an elastic film having a WVTR of at least 1000 g/m²/per 24 hours and a non-woven fabric having an elongation less than 30% but greater than 5%, comprising laminating the elastomeric film and the prestretched non-woven fabric, the lamination method being selected from the group consisting of fusion lamination, heat lamination, and hot needle lamination, wherein said lamination method imparts a breathability, or WVTR, to the laminate of at least 1000 g/m²/per 24 hours at a temperature of 37.8°C, wherein the laminate is stretchable in the cross or transverse direction over a range of 5% to 30%.

The foregoing aspects, features and advantages of the present invention will become clearer and more fully understood when the following detailed description is examined along with the appended claims.

### BRIER DESCRIPTION OF THE DRAWINGS

Figures 1A-1D illustrate a series of events within the lamination process of the present invention.

### DETAILED DESCRIPTION OF PRESENTLY PREFERRED EXEMPLARY EMBODIMENTS

### Introduction

This invention includes a method of preparing certain non-woven fabric and elastomeric film laminates that simultaneously exhibit stretchability in the CD or MD, or both, and breathability.

In certain embodiments of the present invention, consolidated non-woven fabric webs, which have been previously known, and elastomeric films, also known, are combined using processes which simultaneously laminate and perforate the web and film components. In addition to cross or transverse direction (TD) consolidated non-woven webs, MD orientation of the non-woven (and elastomeric film) is also contemplated. This invention further includes certain elastomeric film and non-woven polymeric laminates, their conversion into fabricated articles such as diapers, adult incontinence apparatus, surgical gowns, surgical hats, surgical gloves, surgical footwear, surgical drapes, feminine hygiene articles, and other such articles wherein having good WVTR combined with good stretch and recovery properties are desirable. The resulting laminates have combinations of properties rendering them superior and unique to laminates previously available. While the properties of elastomeric film and non-woven polymeric laminates, along with methods of constructing them, are discussed herein, other methods of attaining a breathable stretchable fabric or garment will be known to those of ordinary skill in the art.

### Production of the Laminate

Laminates contemplated by the instant invention may be made from a combination of consolidated or stretchable non-woven polymeric webs, constructed according to methods taught in U.S. Patent No. RE35,205. and an elastic or elastomeric film. Lamination may be accomplished by any of the processes discussed herein. To make the resulting laminate breathable, another operation is performed, such as putting the laminate through interdigitating rollers in either the MD or the TD, or both, putting the laminate through a perforating means or mechanism, or other similar operations.

Those of ordinary skill in the art will appreciate that more than one consolidated non-woven web can be laminated to the elastic film. Also, other layers may be subsequently laminated or extrusion-coated onto the non-woven, elastic film laminate.

Additionally, in a preferred embodiment, lamination and perforation or other means of imparting breathability, in terms of increased WVTR, may be performed on the two layers simultaneously. In a preferred embodiment, the lamination/breathability process used is ultrasonic. In such a process, the points of welding also become microvoids or pores.

### The Elastic Film

The elastic film of our invention can comprise one of several variations. Among these are monolayer elastomeric polymer films, coextruded films with an elastomeric core (as in a three-layer A/B/A film), or where the elastic film is one side of an A/B coextrusion. In the case of an elastomeric monolayer, the elastomer may be chosen from Styrene Isoprene Styrene, Styrene Butadiene Styrene, Styrene Ethylbutylene Styrene, Ethylene Propylene, Ethylene-Propylene Diene Terpolymer, and combinations thereof. Such elastomers may be compounded with typical elastomeric compounding ingredients that are well known to those of ordinary skill in the art. Additionally, the elastomer or elastomers may be blended with thermoplastics to improve extrudability. Such poleolefins may be chosen to enhance extrusion, but minimally detract from the elastic nature of the primary component, and include, but are not limited to, Ethylene Vinyl Acetate, Ethylene Methyl Acrylate, Ethylene-Butyl Acrylane, Ethylene-Ethylacrylate, plastomers, Ultra-Low Density Polyethylene (i.e., density of less than 0.9 g/cm³), combinations thereof, and the like.

In coextruded elastic films, it is important that the film be elastic, or upon performing a laminating operation, the laminate must be elastic, and ultimately breathable. In one preferred embodiment, a polypropylene (PP) material is used as a part of the film coextrusion to enhance bonding to non-wovens which are often made of PP as well.

Preferred PP's are impact copolymer, homopolymer, and metallocene catalyst produced PP.

### The Non-Woven Component

The non-woven component may comprise a consolidated non-woven fabric, similar to or identical to that disclosed in U.S. Patent No. Re: 35,206 or U.S. Patent No. 5,814,569 which is elastic prior to laminating. The elasticity of such webs as described in the aforementioned document is typically in the cross direction. While certain embodiments of our invention include such cross direction elastic webs, but we also contemplate certain stretchability or elasticity in the machine direction as an additional component of the laminate.

Our invention include an elasticity of 10% to 200% in the transverse direction (for the laminate), preferably 40% to 150%, and more preferably 100% to 150%. The laminate preferably has an elasticity in the machine direction of 1% to 10%, and more preferably from 3% to 10%.

A preferred non-woven for use with various embodiments of our invention will include the extensibility or elasticity described above and additionally will have a two-layer design: the first layer (facing the wearer) will be made from fibers that are hydrophobic or exhibit fluid repellency, such as PP. Such fibers will have a water contact angle greater than 90% as measured by a Rohm goniometer. The second layer (facing the elastic film) used in the present invention will have a hydrophilic treatment of such fibers, which can be accomplished by any method known in the art, including surfactant spray, or resin incorporation.

The non-woven used in various embodiments of the present invention, once stretched and treated, will typically include the characteristics of a microdenier pattern and low porosity as described in U.S. Patent No. RE35,206; microvoids present in the non-woven act as suction voids to force the moisture from the wearer's skin to the inside of the laminate, where it evaporates.

### Laminating Process

The laminating process perforates the film and thereby renders the laminate breathable. Specifically, we contemplate using hot needle or fusion lamination to accomplish the laminating and perforating goals. Of these, fusion lamination is preferred, wherein energy concentrated in small areas (approximately 10 x 10 µm) causes the layers of non-woven fabric and elastic film to fuse, along with creating a microvoid.

The preferred hot needle process and equipment for the lamination and perforation can be obtained from AFS in Germany, or Herrmann Ultrasonics in the United States.

Given the fact that a garment experiences several cycles of stretch and recovery as the wearer moves, the present laminate must exhibit resistance to delamination. Security is provided by insuring that the average peel force required to separate the layers is greater than 150 g/m² and most preferably greater than 300 g/m². In addition, in order to maintain the desired elasticity, the bonding between layers should not exceed 80% of the total area in contact between the film and the non-woven fabric.

The WVTR of the laminate produced as a part of the instant invention should be above 1000 g/m²/per 24 hours at a temperature of 378.8°C, 90% RH, and more preferably above 3000 g/m²/per 24 hours at a temperature of 37.8°C. 90% RH. For the purposes of the instant invention, WVTR is measured using the material sold under the name of Celgard™ 2400 (a porous polypropene), which has a standardized WVTR of 8740 g/m²/per 24 hours, based on the ASTM 1249-90 testing protocol. Any of several test methods to determine WVTR can be used based on this standard and protocol, as are well known in the art.

It will be appreciated by those of ordinary skill in the art that the films comprising metallocene-polyethylene resins used in certain embodiments of the present invention can be combined with other materials, depending on the intended function of the resulting laminate. Other methods of improving and/or controlling WVTR properties of the film or container may be used in addition to the methods described herein without departing from the intended scope of the invention. For example, mechanical treatment may be applied to produce voids in the film, such as micropores.

### EXAMPLES

A prestretched non-woven fabric produced by uniaxially drawing the non-woven in the MD according to the teachings of U.S. Patent No. Re: 35,206 is combined in a hot needle perforation nip with an elastic film that has a PP skin layer according to the process shown in Figs. 1A, 1B, 1C, and ID. The total percent bond area is greater than about 13%, the bonding resulting from in-situ melting and recrystallization between the PP in the non-woven fabric and the PP in the skin layer of the film. The bond appears as a polymer ring around the hole that the needle forms when perforating the film and the non-woven (see Figs. 1A, 1B, 1C, and 1D). The resultant laminate is breathable and extensible in both the TD and the MD.

As can be seen in Fig. 1A, the non-woven and the film components pass between a first roller A, and a second roller B. The roller A comprises a plurality of needles which are used to perforate the laminate as it is formed. As can be seen in Fig. 1B, the needles rotate in the machine direction, and perforate the laminate (see Fig. 1C) so as to form a void, which remains in the laminate after the needle is withdrawn (see Fig. 1D).

The elastic laminate of the present invention using an elastomeric film having a WVTR of at least 1000 g/m²/per 24 hours can be prepared by using a nonwoven fabric having an elongation at break (i.e., the nonwoven is stretched to a certain extent and then broken before lamination) of 40% to 300% by applying a lamination process to the nonwoven fabric and an elastomeric film. The lamination process can be selected from a group consisting of fusion lamination, heat lamination, thermo-mechanical bonding, or hot needle lamination. The lamination process will thereby impart a breathability, or WVTR, to the laminate of at least 1000 g/m²/per 24 hours at a temperature of 37.8°C, such that the resulting laminate is stretchable in the TD within a range of 10% to 200%. The laminate produced according to the method of the instant invention is stretchable in the machine direction over a range of 3% to 10%.

The method of the instant invention for preparing an elastic laminate which includes an elastic film having a WVTR of at least 1000 g/m²/per 24 hours and a nonwoven fabric having a TD elongation at break of less than 300% and greater than 40%, wherein the fabric has a hydrophobic side facing a wearer and a hydrophilic side facing the elastic film, comprises laminating the elastomeric film and the fabric, using a lamination process selected from the group consisting of fusion lamination, heat lamination, thermo-mechanical bonding, or hot needle lamination, wherein the lamination process imparts a breathability, or WVTR, to the laminate of at least 1000 g/m²/per 24 hours at a temperature of 37.8°C. The laminate is stretchable in the TD within a range of 10% to 200%. The resulting laminate typically has a TD extensibility between 30% a and 200%, and a WVTR of at least 5000 g/m²/per 24 hours, and is capable of absorbing skin moisture at a rate of greater than 1 ml/sec/m².

## Claims

1. A method of preparing a breathable elastic laminate by hot needle lamination comprising passing concurrently an elastic film and a stretchable non-woven fabric between a first roller A and a second roller B, wherein roller A comprises a plurality of hot needles which are used to perforate the breathable elastic laminate as it is formed and roller B comprises a plurality of recesses capable to receive the needles of roller A, wherein roller A rotates in the machine direction, the non-woven fabric having an elongation at break of 40% to 300% and the elastic laminate having a WVTR (water vapor transmission rate) of at least 1000 g/m²/per 24 hours at a temperature of 37.8°C and 90% relative humidity and being stretchable in the transverse direction within a range of 10% to 200%.

2. The method according to claim 1, wherein the elastic laminate is stretchable in the machine direction within a range of 3% to 10%.

3. The method according to claim 1 or claim 2, wherein the elastic laminate has an average peel force of more than 150 g/m².

4. The method according to claim 3, wherein the elastic laminate has an average peel force of more than 300 g/m².

5. The method according to any one of the preceding claims, wherein the elastic laminate has a WVTR of at least 3000 g/m²/per 24 hours at a temperature of 37.8°C and 90% relative humidity.

6. The method according to any one of the preceding claims, wherein the clastic laminate has a WVTR of at least 5000 g/m²/per 24 hours at a temperature of 37.8°C and 90% relative humidity.

7. The method according to any one of the preceding claims, wherein the elastic laminate is capable of absorbing skin moisture at a rate of greater than 1 ml/s/m².

8. The method according to any one of the preceding claim, wherein the non-woven fabric has a hydrophobic side facing a wearer and a hydrophilic side facing the elastic film.

9. The method according to any one of the preceding claims, wherein the elastic film has a polypropylene skin layer.

10. The method according to claim 9, wherein the polypropylene material is an impact copolymer, a polypropylene homopolymer or a metallocene catalyst produced polypropylene.

11. The method according to any one of the preceding claims, wherein roller A and roller B are interdigitating rollers.

12. The method according to any one of the preceding claims, wherein the hot needles perforate the laminate and form a void which remains in the laminate after the needle is withdrawn.

13. The method according to Claim 12, wherein the void is a microvoid.

14. The method according to Claim 12 or Claim 13, wherein the void has a ring shape.

15. The method according to any one of the preceding claims, wherein the non-woven fabric is consolidated.

16. The method according to any one of the preceding claims, wherein the non-woven fabric has an elasticity in the cross direction.

17. The method according to any one of the preceding claims, wherein the non-woven fabric has an elasticity in the cross direction and in the machine direction.

18. Use of an elastic laminate obtained by the method according to any one of claims 1 - 17 for the fabrication of diapers, adult incontinence apparatus, surgical gowns, surgical hats, surgical gloves, surgical footwear, surgical drapes and feminine hygiene articles.

## Patentansprüche

1. Verfahren zur Herstellung eines atmungsaktiven Schichtstoffverbundes mit einer Heißnadellaminierung, umfassend das gleichzeitige Durchgehen einer elastischen Folie und dehnbarer, nicht gewebter Fasern zwischen einer ersten Walze A und einer zweiten Walze B, wobei die Walze A eine Vielzahl von heißen Nadeln umfasst, die verwendet werden, um den atmungsaktiven elastischen Schichtstoffverbund zu perforieren, wenn er ausgebildet wird, und Walze B eine Vielzahl von Aussparungen umfasst, die geeignet sind, die Nadeln der Walze A aufzunehmen, wobei die Walze A in Maschinenrichtung dreht, die nicht gewebten Fasern eine Reißfestigkeit von 40 % bis 300 % aufweisen und der elastische Schichtstoffverbund eine WVTR (Wasserdampfdurchlässigkeitsrate) von wenigstens 1000 g/m²/24 h bei einer Temperatur von 37,8° C und 90 % relativer Luftfeuchtigkeit aufweist und in Querrichtung in einem Bereich von 10 % bis 200 % dehnbar ist.

2. Verfahren nach Anspruch 1, wobei der elastische Schichtstoffverbund in Maschinenrichtung in einem Bereich von 3 % bis 10 % dehnbar ist.

3. Verfahren nach Anspruch 1 oder 2, wobei der elastische Schichtstoffverbund eine mittlere Haftfestigkeit von mehr als 150 g/m² aufweist.

4. Verfahren nach Anspruch 3, wobei der elastische Schichtstoffverbund eine mittlere Haftfestigkeit von mehr als 300 g/m² aufweist.

5. Verfahren nach einem der vorhergehenden Ansprüche, wobei der elastische Schichtstoffverbund eine WVTR von wenigstens 3000 g/m²/24 h bei einer Temperatur von 37,8° C und 90 % relativer Luftfeuchtigkeit aufweist.

6. Verfahren nach einem der vorhergehenden Ansprüche, wobei der elastische Schichtstoffverbund eine WVTR von wenigstens 5000 g/m²/24 h bei einer Temperatur von 37,8° C und 90 % relativer Luftfeuchtigkeit aufweist.

7. Verfahren nach einem der vorhergehenden Ansprüche, wobei der elastische Schichtstoffverbund geeignet ist, Hautfeuchtigkeit mit einer Rate von größer als 1 ml/sec/m² zu absorbieren.

8. Verfahren nach einem der vorhergehenden Ansprüche, wobei die nicht gewebten Fasern eine zum Träger zugewandte hydrophobe Seite und eine zur elastischen Folie zugewandte hydrophile Seite aufweisen.

9. Verfahren nach einem der vorhergehenden Ansprüche, wobei die elastische Folie eine Polypropylenoberschicht aufweist.

10. Verfahren nach Anspruch 9, wobei das Polypropylenmaterial ein schlagzähes Copolymer, ein Polypropylen Homopolymer oder ein Metallocen-katalysiertes Polypropylen ist.

11. Verfahren nach einem der vorhergehenden Ansprüche, wobei die Walzen A und B ineinander greifende Walzen sind.

12. Verfahren nach einem der vorhergehenden Ansprüche, wobei die heißen Nadeln den Schichtstoffverbund perforieren und einen Hohlraum erzeugen, der in dem Schichtstoffverbund bleibt, nachdem die Nadel herausgezogen ist.

13. Verfahren nach Anspruch 12, wobei der Hohlraum eine Mikropore ist.

14. Verfahren nach Anspruch 12 oder 13, wobei der Hohlraum eine Ringform aufweist.

15. Verfahren nach einem der vorhergehenden Ansprüche, wobei die nicht gewebten Fasern verdichtet sind.

16. Verfahren nach einem der vorhergehenden Ansprüche, wobei die nicht gewebten Fasern eine Dehnbarkeit in Querrichtung aufweisen.

17. Verfahren nach einem der vorhergehenden Ansprüche, wobei die nicht gewebten Fasern eine Dehnbarkeit in Quer- und Maschinenrichtung aufweisen.

18. Verwendung eines elastischen Schichtstoffverbunds, das nach dem Verfahren gemäß einem der Ansprüche 1 bis 17 erhalten wurde, zur Herstellung von Windeln, Inkontinenzsystemen für Erwachsene, Operationskitteln, Operationskopfbedeckungen, Operationshandschuhen, Operationsschuhen, Operationsdecken und Hygieneartikeln für Frauen.

## Revendications

1. Procédé de préparation d'un stratifié élastique perméable par stratification sous aiguilles chaudes, comprenant le passage simultané d'un film élastique et d'un tissu non tissé extensible entre un premier rouleau A et un second rouleau B, dans lequel le rouleau A comprend une pluralité d'aiguilles chaudes qui sont utilisées pour perforer le stratifié élastique perméable au moment de sa formation et le rouleau B comprend une pluralité de renfoncements capables de recevoir les aiguilles du rouleau A, dans lequel le rouleau A tourne dans le sens machine, le tissu non tissé présentant un allongement à la rupture de 40 % à 300 % et le stratifié élastique présentant un WVTR (coefficient de transmission de la vapeur d'eau) d'au moins 1 000 g/m²/ par 24 heures à une température de 37,8 °C et à une humidité relative de 90 % et étant extensible de 10 % à 200 % dans le sens transversal.

2. Procédé selon la revendication 1, dans lequel le stratifié élastique est extensible de 3 % à 10 % dans le sens machine.

3. Procédé selon la revendication 1 ou la revendication 2, dans lequel le stratifié élastique présente une force moyenne de pelage supérieure à 150 g/m².

4. Procédé selon la revendication 3, dans lequel le stratifié élastique présente une force moyenne de pelage supérieure à 300 g/m².

5. Procédé selon l'une quelconque des revendications précédentes, dans lequel le stratifié élastique présente un WVTR d'au moins 3 000 g/m²/ par 24 heures à une température de 37,8 °C et à une humidité relative de 90 %.

6. Procédé selon l'une quelconque des revendications précédentes, dans lequel le stratifié élastique présente un WVTR d'au moins 5 000 g/m²/ par 24 heures à une température de 37,8 °C et à une humidité relative de 90 %.

7. Procédé selon l'une quelconque des revendications précédentes, dans lequel le stratifié élastique est capable d'absorber l'humidité de la peau à une vitesse supérieure à 1 ml/s/m².

8. Procédé selon l'une quelconque des revendications précédentes, dans lequel le tissu non tissé possède un côté hydrophobe en face d'un porteur et un côté hydrophile en face du film élastique.

9. Procédé selon l'une quelconque des revendications précédentes, dans lequel le film élastique possède une couche de revêtement en polypropylène.

10. Procédé selon la revendication 9, dans lequel le matériau de polypropylène est un copolymère de résistance aux chocs, un homopolymère de polypropylène ou un polypropylène produit en présence d'un catalyseur de type métallocène.

11. Procédé selon l'une quelconque des revendications précédentes, dans lequel le rouleau A et le rouleau B sont des rouleaux interdigités.

12. Procédé selon l'une quelconque des revendications précédentes, dans lequel les aiguilles chaudes perforent le stratifié et forment un vide qui reste dans le stratifié après le retrait de l'aiguille.

13. Procédé selon la revendication 12, dans lequel le vide est un microvide.

14. Procédé selon la revendication 12 ou la revendication 13, dans lequel le vide est en forme d'anneau.

15. Procédé selon l'une quelconque des revendications précédentes, dans lequel le tissu non tissé est consolidé.

16. Procédé selon l'une quelconque des revendications précédentes, dans lequel le tissu non tissé présente une élasticité dans le sens travers.

17. Procédé selon l'une quelconque des revendications précédentes, dans lequel le tissu non tissé présente une élasticité dans le sens travers et dans le sens machine.

18. Utilisation d'un stratifié élastique obtenu par le procédé selon l'une quelconque des revendications 1 à 17, pour la fabrication de couches pour bébé, d'appareil de lutte contre l'incontinence des adultes, de blouses chirurgicales, de coiffes chirurgicales, de gants chirurgicaux, de chaussures chirurgicales, de draps chirurgicaux et d'articles d'hygiène féminine.
